# NEW EUROPEAN PATENT SPECIFICATION

(11) **EP 2 668 705 B3**
(45) Date of publication of this specification: **07.08.2019**
(45) Mention of the grant of the patent: 23.11.2016
(21) Application number: 12703011.2
(22) Date of filing: 27.01.2012
(51) Int. Cl.: H02J 3/00, H02J 3/38

(54) **LOCAL POWER SUPPLY INSTALLATION**
LOKALE STROMVERSORGUNGSANLAGE
INSTALLATION D'ALIMENTATION ÉLECTRIQUE LOCALE

(30) Priority: 28.01.2011 DE 102011000394
(43) Date of publication of application: 04.12.2013
(73) Proprietor: SMA Solar Technology AG, 34266 Niestetal (DE)
(72) Inventor: ALLERT, Claus, 34260 Kaufungen (DE)
(74) Representative: Lahnor, Peter
(86) International application number: PCT/EP2012/051339
(87) International publication number: WO 2012/101258

(56) References cited:
- EP-A1- 1 965 483
- US-A1- 2004 264 089
- US-A1- 2009 058 573

## Description

The invention relates to a local power supply installation according to the precharacterizing clause of Claim 1. The invention also relates to an operating method for operating a local power supply installation.

Such a local power supply installation is used for a standby power supply, also called backup power supply, for an electrical installation, for example in a dwelling, when a supply from a power supply network to which the electrical installation is connected is interrupted, for example as a result of a failure in the power supply network. The local power supply installation monitors the power supply network and, in the event of a network failure, switches to a so-called stand-alone or island network operation. In this case, the local power supply installation disconnects the connection to the power supply network and switches on a standby power supply. The standby power supply may be fed from a storage unit, for example a rechargeable battery with appropriate power reserves, and thus forms a local stand-alone network. This standby power supply may be provided, for example, by an inverter which converts a DC voltage from a storage unit to an AC voltage. During stand-alone network operation, the power supply network is continuously monitored by the local power supply installation. As soon as the power supply network is available again, the local power supply installation switches back from stand-alone network operation to normal network operation again. In this case, the storage unit is then recharged.

The document EP 1 965 483 A1 describes such a local power supply installation. In this case, a local power generating unit, for example a photovoltaic installation, is extended by an inverter with a storage unit. The inverter is designed to monitor the power supply network, to disconnect the local power supply installation from the power supply network in the event of failure of the power supply network, and to form a local network autonomously. Various local power generating units can then be used in a modular fashion to feed power into this local network.

The power supply network is usually a public three-phase power supply network, although it may also be a regional power supply network. Such a regional power supply network could, for example, be fed from a continuously running electrictiy generator, wherein this generator does not need to be located at the same point as the electrical installation. The local electrical installations, for example in a dwelling or an industrial installation, are usually connected to a plurality of phases, in particular to all three phases, of the power supply network, in order to distribute the load caused by the consumers uniformly between the phases.

Usually, local power supply installations are single-phase installations, as a result of which, in the event of a network failure, only some loads, in particular the most important loads, may be supplied with power. Alternatively, a dedicated standby power supply is required for each phase.

There is a need for local power supply installations which do not need to have three-phase energy sources, such as diesel generators or a plurality of inverters, but are nevertheless able to supply power to the loads on all the phases in a local network in the event of failure of the power supply network.

One object of the present invention is therefore to provide an improved local power supply installation. A further object is to provide an operating method for a local power supply installation.

This object is achieved by a local power supply installation having the features of Claim 1. It is also achieved by an operating method having the features of Claim 6. Developments and advantageous refinements are specified in the dependent claims.

According to a first aspect of the invention, the local power supply installation comprises the following: a multiphase transmission line for transmission of electrical power from a power supply network to a load arrangement, a disconnecting device, configured to separate the transmission line into two mutually electrically isolated sections when the disconnecting device is operated, a feeding section and an outgoing section; a network monitoring device connected to the feeding section of the transmission line and configured for monitoring a status of the power supply network; and a network former connected to the outgoing section of the transmission line via at least one phase. The local power supply installation is characterized by at least one connecting device connected to the outgoing section of the transmission line and configured to connect at least one phase in the outgoing section of the transmission line to another phase in the outgoing section of the transmission line to form a common phase.

The connections of the sections of the transmission line and of further functional units in the following designate electrically conductive connections. The term "disconnecting device" designates that both "normally-open" as well as "normally-closed" switches may be used. An electrical power supply network having at least two, three or more phases and a neutral conductor is referred to in the following text as a multiphase network, while a single-phase network means a network with one phase and one neutral conductor.

A network former means a device which is designed to form a local power supply network by being able to predetermine a network voltage, a frequency and phase angle. Such a local network, which is isolated from a comprehensive power supply network, is also referred to as a stand-alone network and its operation is referred to as stand-alone network operation. The electrical energy which is required for this purpose is taken, for example, from a storage (battery), or from a generator which is driven by an internal combustion engine, by wind/water power, or in some other way. The network former may comprise a battery and an inverter.

A monitoring device is used for monitoring an electrical network, with voltage, frequency and phase angle being determined, and with an existing status being derived therefrom. If all monitored parameters correspond to their rated values, within a predetermined tolerance range, the network status is referred to as being in the normal status. In the event of discrepancies therefrom, a fault status is detected, for example a network failure.

In the fault status of the power supply network, all the phases of the electrical installation are connected together to form a common phase on the load side, and these phases are also referred to in the following text as outgoing phases. Power from a network former is supplied to this common phase. In one possible embodiment this network formercomprises a single-phase inverter with a DC voltage source. This connection of the outgoing phases is cancelled, i.e. disconnected again, before switching back to network operation when the power supply network returns to the normal status.

The loads are usually single-phase appliances which are distributed between the outgoing phases, in order to achieve a uniform loading on the phases of an electrical installation. The connection of the outgoing phases in the event of a fault status in the power supply network results in all the loads being supplied, in contrast to an emergency power supply on only one phase. There is therefore no need for an additional multiphase generator for emergency operation.

In one embodiment of the invention, a control device is provided for controlling the connecting device, the disconnecting device and the network former. The control device can for example be connected for communication purposes to the network monitoring device and can use the output signals from this network monitoring device to control the connected switches and the connecting device in an appropriate time sequence.

In one advantageous embodiment of the invention, wherein the network former has a single-phase inverter for each outgoing phase, in the event of a network failure being detected, first of all all phases of the single-phase inverter are synchronized to one phase. That is to say the phase shift between the phases that usually exists (for example 120° in the case of three phases, 180° in the case of two phases) is eliminated before the outgoing phases are being connected. Before returning to network operation, the outgoing phases are firstly disconnected from each other again, followed by a process of the individual single-phase inverters being synchronized back to the previously existing phase shift, before being connected to the power supply network.

In this case, it is particularly advantageous that, when the outgoing phases are coupled during stand-alone network operation, the performance and in particular the overload capability of all the connected inverters are jointly available for operation of the loads, since the coupled outgoing phases are connected in parallel. Vice versa - depending on the power demand - it is possible to connect or disconnect inverters, for example, to save energy during low-load times (for example at night).

In a further embodiment, a local power generating unit, in particular a photovoltaic generator in connection with a photovoltaic inverter, is provided for feeding power into the transmission line. The local power generating unit can be connected to the feeding section of the transmission line or to the outgoing section of the transmission line. A local power generating unit can also be fed by other energy sources, such as wind or water power, fuel cells or internal combustion engines.

In this case, it is advantageously possible for the local power generating unit to be used both for feeding into the power supply network during network operation and for feeding into the outgoing phases in the event of a fault status of the power supply network.

The transmission line may be of three-phase design and the connecting device may be configured to connect all three phases in the outgoing section to form a common phase.

The network former may be of multiphase design, and the local power generating unit may be connected to one phase of the transmission line.

The local power supply installation may have a control device which is designed to operate the disconnecting device, the connecting device and the network former in order to form a stand-alone network in the outgoing section of the transmission line in a situation in which the network monitoring device detects a fault status in the power supply network.

An operating method, for example for a local power supply installation as described above, which is connected on the one hand to a multiphase power supply network and on the other hand to a load arrangement with loads, has the following steps:
The power supply network is monitored and its status is determined. If a fault status is determined in the power supply network, the load arrangement is disconnected from the power supply network. In order to supply at least some of the loads, at least two phases of the load arrangement are connected in this way the loads are supplied from a network former via the phases which have been connected.

The status of the power supply network can also be monitored in order to disconnect the at least two phases of the load arrangement from each other after the power supply network has returned to the normal status, that is to say after the end of the fault status, and to reconnect the load arrangement to the power supply network, in order to supply the loads. In this case, the network former may be switched on or off as needed referring to the status of the power supply network.

In one particularly preferred embodiment of the operating method, in the fault status, all the phases of the load arrangement are connected together in order to supply all the loads.

In one embodiment, the power supply installation has a multiphase network former, which may comprise one inverter or a plurality of single-phase inverters, which are coupled to one another to provide a multiphase network with a phase shift between the phases. Referring to the operating method in this case, this phase shift is eliminated, i.e. the phases are synchronized, before the phases are connected. This means that, once the fault status has been detected in the power supply network, the phase angles are synchronized at such outputs of the network former, whose associated phases are to be connected.

In a further embodiment of the operating method, after the disconnection of the at least two phases of the load arrangement, the phase angle at the outputs of the network former is first of all synchronized with corresponding phase angles in the power supply network. After this the load arrangement is reconnected to the power supply network, in order to ensure an uninterrupted transition between the stand-alone network supply and the supply from the power supply installation.

In comparison to the prior art, the local power supply installation according to the invention and the operating method according to the invention now make it possible to carry out an automatic transition between multiphase network operation and stand-alone network operation, which in the simplest case is fed from only one phase, in a simple manner, without any changes in the installation being required for the single-phase loads.

The invention will be explained in more detail in the following text with reference to exemplary embodiments and with the aid of figures, in which:
- Figure 1: shows a general block diagram of a local power supply installation;
- Figure 1a: shows a block diagram of one embodiment of a network former for a local power supply installation as shown in Figure 1;
- Figure 2: shows a block diagram of one exemplary embodiment of the local power supply installation;
- Figure 3: shows a circuit diagram of the exemplary embodiment of the local power supply installation shown in Figure 2;
- Figure 4: shows a circuit diagram of a further variant of the exemplary embodiment shown in Figure 2; and
- Figure 5: shows a flowchart of a method.

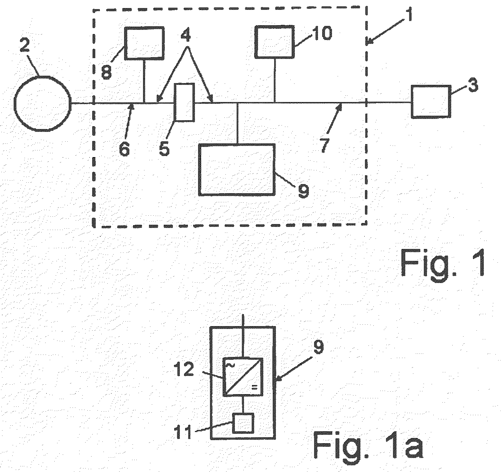

Figure 1 illustrates a general block diagram of a local power supply installation 1 according to the invention.

The local power supply installation 1 has a multiphase transmission line 4 which can be subdivided by a disconnecting device 5, for example a mechanical switch, into a feeding section 6 and an outgoing section 7, for example when the disconnecting device 5 is operated. The sections 6 and 7 which have been subdivided in this way, they are electrically isolated and disconnected from one another. The transmission line 4 is intended to have three phases in this example.

The feeding section 6 of the transmission line 4 is electrically conductively connected to a power supply network 2, for example a public power supply network. The outgoing section 7 of the transmission line 4 is connected to a load arrangement 3. The individual loads are in general connected in a distributed manner to the multiphase transmission line 4, such that all the phases are loaded as uniformly as possible.

A network monitoring device 8 is connected to the feeding section 6 of the transmission line 4 and is provided for monitoring a status of the power supply network 2. This status may be normal operation or a fault status. In the fault status, the power supply network 2 has, for example, failed or does not comply with its expectancy values, for example in voltage, frequency.

A network former 9 is connected on at least one phase to the outgoing section 7 of the transmission line 4.

In addition, the outgoing section 7 of the transmission line 4 is connected to at least one connecting device 10. The connecting device 10 is designed to connect at least one phase to one other phase of the outgoing section 7 to form a common phase in the outgoing section 7.

Figure 1a shows one example of a network former 9. This network former 9 has a rechargeable battery 11 which is connected to an inverter 12. The inverter 12 uses the DC voltage from the battery 11 at its input to produce an AC voltage at its AC voltage output. The network former 9 may feed into one phase of the multiphase transmission line 4 or, as a multiphase inverter, may feed into a plurality of phases, or may consist of a plurality of possibly coupled inverters 12 with a common or respectively separate battery, in order to allow power to be supplied to all the phases of the transmission line 4. The network former 9 may also be a generator, which is driven by various power machines, for example an internal combustion engine, a fluid turbine, a wind power drive or the like.

The inverter 12 is a unit which is able to operate from the DC supply forming a network, that is to say to produce an AC voltage and thus to form a supply network and to supply the load arrangement. This is generally a bidirectional battery inverter, which is additionally also able to charge the batteries from the AC voltage side.

In one embodiment, the local power supply installation 1 according to the invention has at least one separate local power generating unit (not shown here) which can be connected on the AC voltage side at any point to the transmission line 4 shown in Figure 1.

The operation of the local power supply installation will be explained with reference to Figure 1.

The power supply network 2 is monitored by the monitoring device 8. If a fault status is found, the disconnecting device 5 is operated, as a result of which the transmission line 4 is subdivided into the feeding section 6 and the outgoing section 7, that is to say the feeding section 6 and the outgoing section 7 are then electrically isolated from one another. The network former 9 is then activated in order to supply energy to the outgoing section 7, in order to supply the load arrangement 3. In addition, at least one phase is connected to another phase of the outgoing section 7 to form a common phase, by activation of the connecting device 10. This makes it possible to supply all the loads which are connected to the different, now connected phases. The power supply network 2 is further monitored, and when the normal status has returned and has been detected, the phases of the outgoing section 7 are disconnected from each other by deactivation of the connecting device 10. The disconnecting device 5 is then deactivated, as a result of which the sections 6 and 7 of the transmission line 4 are connected to one another again. The bidirectional inverter for the network former 9 can recharge the batteries. The load arrangement 3 can now be supplied from the power supply network 2 again.

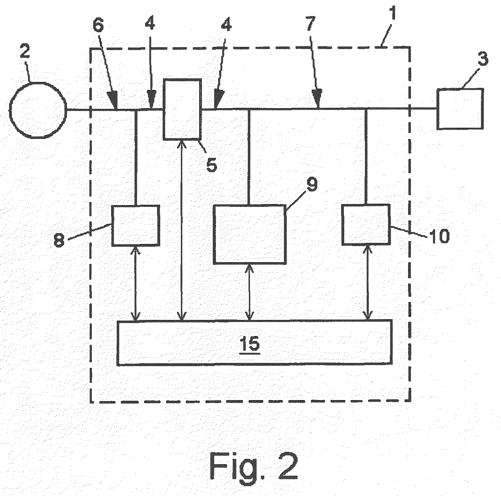

Figure 2 shows a block diagram of a further exemplary embodiment of the local power supply installation 1 according to the invention.

In this case, the local power supply installation 1 is provided with a control device 15, which is functionally connected to the network monitoring device 8, to the disconnecting device 5, to the network former 9 and to the connecting device 10. This is in each case indicated by double-headed arrows with the aim of illustrating that the control device 15 not only controls the respective functional units, but can also receive information from them. By way of example, the control device 15 may also be integrated in the network former 9, the connecting device 10 or the network monitoring device 8.

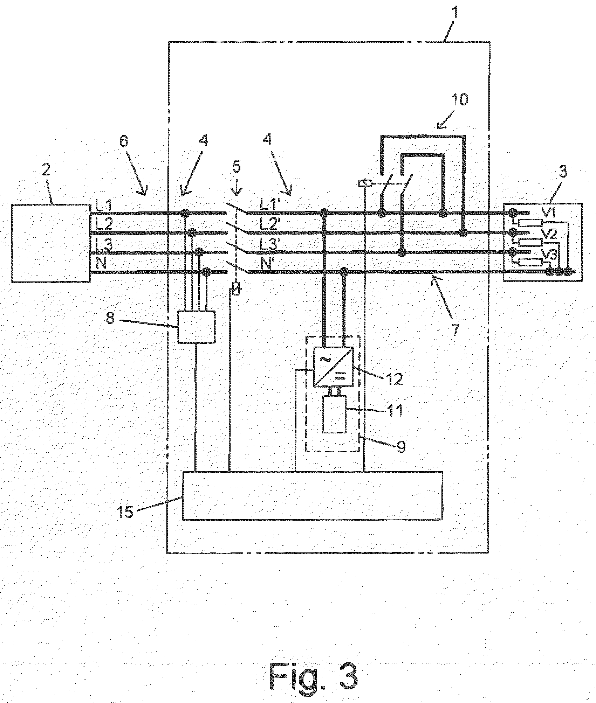

Figure 3 shows a circuit diagram of the exemplary embodiment of the local power supply installation 1 according to the invention as shown in Figure 2.

The local power supply installation 1 is used to ensure power is supplied to at least one load arrangement 3 having at least one load V1, V2, V3, after failure of the power supply network 2.

The local power supply installation 1 comprises at least one network former 9 with an inverter 12 and a battery 11, a network monitoring device 8, a control device 15, a connecting device 10 and a disconnecting device 5.

On the AC voltage side, the inverter 12 is, for example, connected to the outgoing phase L1' and to the outgoing neutral conductor N'.

The network monitoring device 8 is connected to the feed phases L1, L2 and L3 and to the feed neutral conductor N of the power supply network 2, and measures the network voltage between these feed phases L1, L2 and L3, and with respect to the feed neutral conductor N. Furthermore, the network monitoring device 8 determines the instantaneous phase angle of the feed phases L1, L2 and L3. The phase angles and network voltage are transmitted to the control device 15 continuously or on request by the control device 15.

In this case, the disconnecting device 5 is a contactor having four normally-open contacts, to which the feed phases L1, L2, L3 and the feed neutral conductor N, and the outgoing phases L1', L2', L3' and the outgoing neutral conductor N', are connected.

By way of example the at least one load arrangement 3 consists of single-phase loads V1, V2, V3 which are each connected between an outgoing phase L1', L2', L3' and the outgoing neutral conductor N'. For example, if this is a building installation, in which there are, of course, a plurality of single-phase loads, then these are distributed between the outgoing phases L1', L2', L3' such that the load is distributed as uniformly as possible, that is to say the outgoing phases L1', L2', L3' are uniformly loaded.

In this case, the connecting device 10 is in the form of a contactor. In this case, a first contact set is used for connection of the outgoing phases L1' and L2'. A second contact set connects the outgoing phases L1' and L3'. The connecting device 10 is in this case activated by switching on a contactor for making the contact sets. The control inputs of the contactor in the connecting device 10 and the disconnecting device 5 are connected to the control device 15, and are controlled by it.

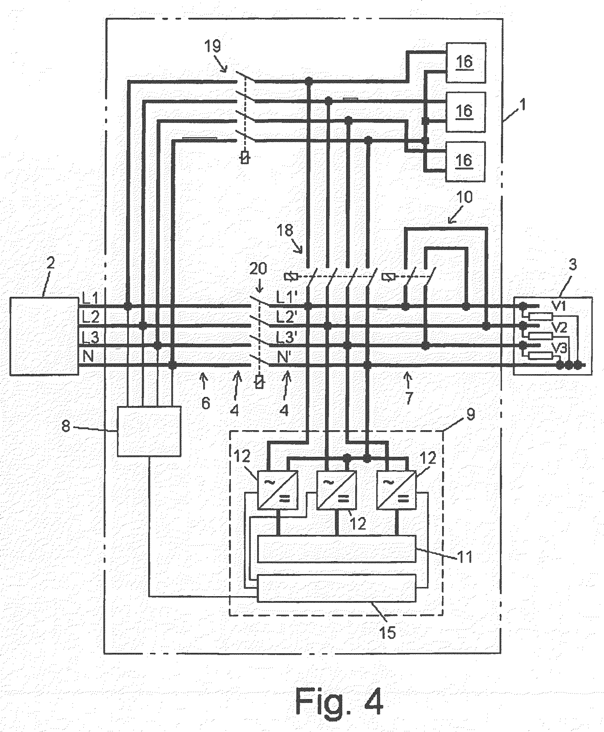

Figure 4 shows a circuit diagram of a further variant of the exemplary embodiment shown in Figure 2.

In this variant, the network former 9 is of three-phase design, with three single-phase inverters 12 each producing one phase with a phase shift between them, and being connected to a common battery 11. Furthermore, three local power generating units 16 are each also provided for one phase. Such local power generating units 16 may, for example, consist of inverters with a further DC voltage source at their input, for example a photovoltaic installation. These inverters are designed for feeding into an existing network, that is to say only when this network is present and is within the selected limits is the feed inverter connected to the network, feeding power into it. It is also possible, of course, to provide only one such local power generating unit 16 for feeding into only one phase.

In this case, the switching members transfer switch 18, feed enable switch 19 and reference enable switch 20 are used as disconnecting devices. These switching means are each designed for three phases and a neutral conductor. The connecting device 10 may be provided by a dedicated contactor, as shown in Figure 3, or uses a common switching member, for example contact sets on the transfer switch 18.

In a first transitional status from the normal status of the power supply network 2 to the fault status, once the feed enable switch 19 and the reference enable switch 20 have been opened, the second and third outgoing phases L2', L3' are synchronized to the first outgoing phase L1' by the control device 15 synchronizing the phases of the associated inverters 12 to the outgoing phase L1'. In this first transitional status, there is no power failure for the load arrangement 3 since each outgoing phase L1', L2', L3' is supplied by a network former 9. The synchronization of the outgoing phases L2', L3' which is carried out in this case cannot be perceived by the loads V1, V2, V3 connected thereto if this is done in a fixed time period which must not be too short and is in the region of several 100 ms.

When the phase angle of the outgoing phases L1', L2', L3' is the same, the connecting device 10 is activated in the manner described above. In the embodiment in which a common contactor (not shown) is used for the transfer switch 18 and the connecting device 10, the local power generating unit 16 is connected, and the phases are connected at the same time.

In this variant with three single-phase inverters as network formers 9 and in the local power generating unit 16, this results in the particular advantage that the overload capability of all the connected inverters 12 is jointly available for the operation of the loads V1, V2, V3, since, when the outgoing phases L1', L2', L3' are connected, the loads V1, V2, V3 are connected in parallel by means of the connecting device 10.

In this case, the inverters 12 can be connected and/or disconnected individually as required in order, for example, to reduce losses and to save energy during low-load times.

In a second transitional status from the fault status of the power supply network 2 to the normal status, the connecting device 10 is first of all deactivated, as a result of which the inverters 12 are no longer connected in parallel and must be individually synchronized back to the feed phases L1, L2, L3 of the power supply network 2. Measured values from the network monitoring device 8 are used for this purpose. After synchronization back, the feed enable switch 19 and the reference enable switch 20 are closed again.

In the case of the variant of the invention shown in Figure 4, a three-phase local power generating unit 16 in the normal case feeds into the feeding section 6 via the feed enable switch 19. In the event of a fault, the feed into the local stand-alone network is provided via a transfer switch 18 after successful disconnection of the local stand-alone network from the power supply network 2, and the described synchronization and connection of the outgoing phases 7.

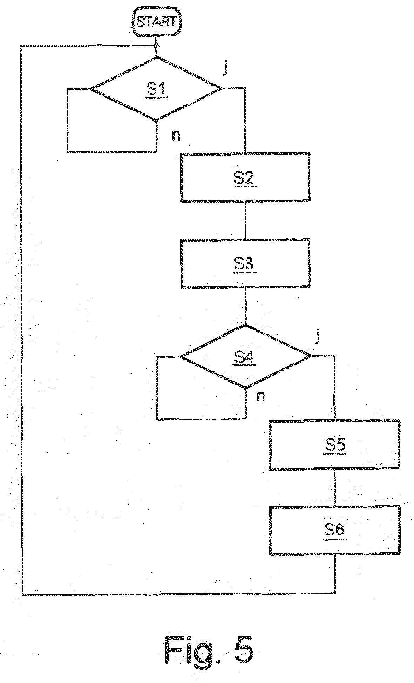

Figure 5 shows a flowchart of a method according to the invention for operation of a local power supply installation 1.

After a start in a step S1, the network monitoring device 8 monitors the power supply network 2 for the network voltage and the phase angle in the normal status. This continues until a fault status occurs, for example a network failure (j).

Then, in a step S2, the disconnecting device 5 and the inverter 12 in the network former 9 are activated in a first transitional status. In the case of the variant shown in Figure 4, that is to say when there are at least two single-phase inverters 12, each of which is connected to one outgoing phase L1', L2', L3', all the inverters 12 are synchronized to one phase.

In a further step S3, the connecting device 10 is activated for connection of the outgoing phases L1', L2', L3'.

In step S4, the power supply network 2 is monitored further by means of the network monitoring device 8.

As soon as it is found that this network has returned to the normal status (j), the phase connection is cancelled in a second transitional status in a step S5, by deactivating the connecting device 10.

In a step S6, synchronization of the inverter or inverters 12 back to the values of the power supply network 2 then takes place and, finally, the deactivation, that is to say closing, of the disconnecting device 5. A jump is then made back to step S1.

The invention is not restricted to the exemplary embodiments described above, but can be modified within the scope of the attached claims.

For example, the connecting device 10 may also have manual switching elements added to it (not illustrated), such that coupling is prevented for individual phases or for all of the phases, or a control process is carried out by the control unit 10 such that it is permanently open, thus preventing a phase connection.

It is also feasible when a local power generating unit 16 is connected, to use network monitoring of the local power generating unit 16 as the network monitoring device 8.

The network monitoring device 8 and the control device 15 may both be integrated in a local power generating unit 16 and in the network former 9.

### List of reference symbols

- 1: Local power supply installation
- 2: Power supply network
- 3: Load arrangement
- 4: Transmission line
- 5: Disconnecting device
- 6: Feeding section
- 7: Outgoing section
- 8: Network monitoring device
- 9: Network former
- 10: Connecting device
- 11: Battery
- 12: Inverter
- 15: Control device
- 16: Local power generating unit
- 18: Transfer switch
- 19: Feed enable switch
- 20: Reference enable switch
- L1...3: Feed phases
- L1'...3': Outgoing phases
- N: Feed neutral conductor
- N': Outgoing neutral conductor
- S1 ... 6: Method step
- V1 ... 3: Load

## Claims

1. Local power supply installation (1) with
- a multiphase transmission line (4) for transmission of electrical power from a power supply network (2) to a load arrangement (3), comprising
a disconnecting device (5), configured to separate the transmission line (4) into two mutually electrically isolated sections, a feeding section (6) and an outgoing section (7), when the disconnecting device (5) is operated;
- a network monitoring device (8) connected to the feeding section (6) of the transmission line (4) and configured for monitoring a status of the power supply network (2); and
- a network former (9) for forming a stand-alone network, the network former (9) being connected the outgoing section (7) of the transmission line (4) via a first phase (L1'),
**characterized by**
at least one connecting device (10) connected to the outgoing section (7) of the transmission line (4) and configured to connect a second phase (L2') and/or a third phase (L3') in the outgoing section (7) of the transmission line (4) to the first phase (L1') in the outgoing section (7) of the transmission line (4) to form a common phase.

2. Local power supply installation (1) according to Claim 1, wherein the network former (9) comprises a battery (11) and an inverter (12),
wherein the inverter (12) is connected to the first phase (L1') and a neutral conductor (N') of the outgoing section (7) of the transmission line (4) such that the inverter can recharge the battery (11) via the first phase (L1') of the outgoing section (7) of the transmission line (4) while the disconnecting device (5) is deactivated and the feeding section (6) and the outgoing section (7) of the transmission line (4) are connected to one another.

3. Local power supply installation (1) according to Claim 1, further comprising a local power generating unit (16), in particular a photovoltaic generator in connection with a photovoltaic inverter, for feeding power into the transmission line (4).

4. Local power supply installation (1) according to one of Claims 1 to 3, wherein the connecting device (10) comprises manual switching elements configured to prevent coupling for individual or all of the phases (L1',L2',L3').

5. Local power supply installation (1) according to one of Claims 1 to 4, further comprising a control device (15) configured to control the disconnecting device (5), the connecting device (10) and the network former (9) to form a stand-alone network in the outgoing section (7) of the transmission line (4) in in case of a fault status of the power supply network (2) detected by the network monitoring device (8).

6. Operating method for a local power supply installation (1), wherein the power supply installation (1) comprises
- a transmission line (4),
- a disconnecting device (5) for dividing the transmission line (4) into a feeding section (6) and an outgoing section (7), and
- a network former (8) connected on at least one phase (L1') to the outgoing section (7) of the transmission line (4) for feeding electrical power into said at least one phase (L1'),
wherein the local power supply installation (1) is connected to a multiphase power supply network (2) and to a load arrangement (3) with loads (V1, V2, V3), the operating method comprising:
- monitoring the power supply network (2) and determining a status of the power supply network (2);
- disconnecting the load arrangement (3) from the power supply network (2) by operating the disconnecting device (5) in case of a determined fault status of the power supply network (2);
- activating the network former (4) and supplying energy to the outgoing section (7) of the transmission line (4) by the network former (4) via said at least one phase (L1');
- connecting said at least one phase (L1') of the load arrangement (3) to another phase (L2',L3') of the outgoing section (7) by activation of a connecting device (10); and
- supplying at least some of the loads (V1, V2) which are connected to the different, now connected phases (L1',L2',L3') by the network former (9) for forming a stand-alone network via the connected phases (L1',L2',L3').

7. Operating method according to Claim 6, comprising the following further steps after the step of connecting the at least two phases of the load arrangement (3):
- monitoring the power supply network (2) and determining a status of the power supply network (2);
- disconnecting the at least two phases of the load arrangement (3) in case the fault status of the power supply network (2) is no longer present; and
- connecting the load arrangement (3) to the power supply network (2) in order to supply the loads (V1, V2, V3).

8. Operating method according to Claim 6 or 7, wherein the network former (9) is switched on or off in relation to the status of the power supply network (2).

9. Operating method according to one of Claims 6 to 8, wherein, , all the phases of the load arrangement (3) are connected in order to supply all the loads (V1, V2, V3) in case of the fault status.

10. Operating method according to one of Claims 6 to 9 for a power supply installation (2) comprising a multiphase network former (9), wherein after the fault status has been determined and before the at least two phases of the load arrangement (3) are connected, the following further step is carried out:
- synchronizing the phase angles at those outputs of the network former (9) that are connected to the phases of the load arrangement (3) before the phases of the load arrangement (3) are connected to each other.

11. Operating method according to Claims 7 and 10, in which, after disconnecting the at least two phases of the load arrangement (3) and before connecting the load arrangement (3) to the power supply network (2), the phase angleat each output of the network former (9) is synchronized with a phase angle of a corresponding phase of the power supply network (2).

## Patentansprüche

1. Lokale Energieversorgungsanlage (1), aufweisend
- eine mehrphasige Übertragungsleitung (4) zur Übertragung elektrischer Energie von einem Energieversorgungsnetz (2) zu einer Anordnung von Verbrauchern (3) umfassend
eine Trenneinrichtung (5), mittels welcher die Übertragungsleitung (4) bei betätigter Trenneinrichtung (5) in zwei voneinander elektrisch isolierte Abschnitte, einen Zuleitungsabschnitt (6) und einen Ableitungsabschnitt (7) unterteilbar ist;
- eine Netzüberwachungseinrichtung (8), welche mit dem Zuleitungsabschnitt (6) der Übertragungsleitung (4) verbunden ist und zur Überwachung eines Zustands des Energieversorgungsnetzes (2) vorgesehen ist; und
- einen Netzbildner (9) zum Aufbau eines autonomen lokalen Energieversorgungsnetzes, welcher über eine erste Phase (L1') mit dem Ableitungsabschnitt (7) der Übertragungsleitung (4) verbunden ist,
**gekennzeichnet durch**
mindestens eine Verbindungseinrichtung (10), welche mit dem Ableitungsabschnitt (7) der Übertragungsleitung (4) verbunden und dazu eingerichtet ist, im Ableitungsabschnitt (7) der Übertragungsleitung (4) eine zweite Phase (L2') und/oder eine dritte Phase (L3') mit der ersten Phase (L1') des Ableitungsabschnitts (7) der Übertragungsleitung (4) zu einer gemeinsamen Phase zu verbinden.

2. Lokale Energieversorgungsanlage (1) nach Anspruch 1, wobei der Netzbildner (9) eine Batterie (11) und einen Wechselrichter (12) umfasst, wobei der Wechselrichter (12) mit der ersten Phase (L1') und einem Neutralleiter (N') des Ableitungsabschnitts (7) der Übertragungsleitung (4) verbunden ist, so dass der Wechselrichter (12) die Batterie (11) über die erste Phase (L1') des Ableitungsabschnitts (7) der Übertragungsleitung (4) wiederaufladen kann, während die Trenneinrichtung (5) deaktiviert ist und der Zuleitungsabschnitt (6) und der des Ableitungsabschnitts (7) der Übertragungsleitung (4) miteinander verbunden sind.

3. Lokale Energieversorgungsanlage (1) nach Anspruch 1, weiter umfassend eine lokale Energieerzeugungseinheit (16), insbesondere ein Photovoltaikgenerator über einen Photovoltaikwechselrichter, zur Einspeisung von Energie in die Übertragungsleitung (4).

4. Lokale Energieversorgungsanlage (1) nach einem der Ansprüche 1 bis 3, wobei die Verbindungseinrichtung (10) manuelle Schaltelemente umfasst, die zur Verhinderung der Verbindung einzelner oder aller Phasen (L1', L2', L3') eingerichtet ist.

5. Lokale Energieversorgungsanlage (1) nach einem der Ansprüche 1 bis 4, umfassend eine Steuereinrichtung (15) eingerichtet zur Ansteuerung der Trenneinrichtung (5), der Verbindungseinrichtung (10) und des Netzbildners (9) zur Ausbildung eines autonomen lokalen Energieversorgungsnetzes im Ableitungsabschnitt (7) der Übertragungsleitung (4) in dem Fall, in welchem die Netzüberwachungseinrichtung (8) einen Fehlerzustand des Energieversorgungsnetzes (2) erfasst.

6. Betriebsverfahren für eine lokale Energieversorgungsanlage (1), wobei die Energieerzeugungsanlage (1)
- eine Übertragungsleitung (4),
- eine Trenneinrichtung (5) zur Aufteilung der Übertragungsleitung (5) in einen Zuleitungsabschnitt (6) und einen Ableitungsabschnitt (7), und
- einen Netzbildner (9), der auf mindestens einer Phase (L1') mit dem Ableitungsabschnitt (7) der Übertragungsleitung (4) verbunden ist, um elektrische Leistung in diese mindestens eine Phase (L1') einzuspeisen, aufweist, wobei die Energieerzeugungsanlage verbunden ist mit einem mehrphasigen Energieversorgungsnetz (2) und einer Anordnung (3) von Verbrauchern (V1, V2, V3), wobei das Verfahren umfasst:
- Überwachen des Energieversorgungsnetzes (2) und Ermitteln eines Zustandes des Energieversorgungsnetzes (2);
- Trennen der Anordnung von Verbrauchern (3) von dem Energieversorgungsnetz (2) durch Aktivieren der Trenneinrichtung (6) im Fall eines ermittelten Fehlerzustands des Energieversorgungsnetzes (2);
- Aktivieren des Netzbildners (9) und Liefern von Energie an den Ableitungsabschnitt (7) der Übertragungsleitung (4) durch den Netzbildner (4) über die mindestens eine Phase (L1'),
- Verbinden der mindestens einen Phase (L1') der Anordnung von Verbrauchern (3) mit einer anderen Phase (L2', L3') des Ableitungsabschnitt (7) durch Aktivieren einer Verbindungseinrichtung (10); und
- Versorgen von wenigstens einigen Verbrauchern (V1, V2), die mit den unterschiedlichen, nun verbundenen Phasen (L1', L2', L3') durch den Netzbildner (9) zum Aufbau eines autonomen lokalen Energieversorgungsnetzes über die verbundenen Phasen (L1', L2', L3').

7. Betriebsverfahren nach Anspruch 6, umfassend die folgenden weiteren Schritte nach dem Schritt des Verbindens von mindestens zwei Phasen der Anordnung von Verbrauchern (3):
- Überwachen des Energieversorgungsnetzes (2) und Ermitteln eines Zustandes des Energieversorgungsnetzes (2);
- Aufheben der Verbindung mindestens zwei Phasen der Anordnung von Verbrauchern (3) in dem Fall, dass der Fehlerzustand des Energieversorgungsnetzes (2) nicht mehr vorliegt; und
- Verbinden der Anordnung von Verbrauchern (3) mit dem Energieversorgungsnetz (2) um die Verbrauchern (V1, V2, V3) zu versorgen.

8. Betriebsverfahren nach Anspruch 6 oder 7, wobei der Netzbildner (9) an- oder abgeschaltet wird entsprechend des Zustandes des Energieversorgungsnetzes (2).

9. Betriebsverfahren nach einem der Ansprüche 6 bis 8, wobei alle Phasen der Anordnung von Verbrauchern (3) miteinander verbunden sind um alle Verbraucher (V1, V2, V3) im Falle des Fehlerzustands zu versorgen.

10. Betriebsverfahren nach einem der Ansprüche 6 bis 9 für eine Energieversorgungsanlage (1) umfassend einen mehrphasigen Netzbildner (9), wobei nachdem der Fehlerzustand ermittelt worden ist und bevor die mindestens zwei Phasen der Anordnung von Verbrauchern (3) verbunden werden, der folgende weitere Schritt ausgeführt wird:
- Synchronisierung der Phasenwinkel an den Ausgängen des Netzbildners (9) die mit Phasen der Anordnung von Verbrauchern (3) verbunden sind, bevor die Phasen der Anordnung von Verbrauchern (3) miteinander verbunden werden.

11. Betriebsverfahren nach den Ansprüchen 7 und 10, wobei nach dem Aufheben der Verbindung von mindestens zwei Phasen der Anordnung von Verbrauchern (3) und vor dem Verbinden der Anordnung von Verbrauchern (3) mit dem Energieversorgungsnetzes (2), der Phasenwinkel an jedem Ausgang des Netzbildners (9) mit einem Phasenwinkel einer entsprechenden Phase des Energieversorgungsnetzes (2) synchronisiert wird.

## Revendications

1. Installation d'alimentation électrique locale (1) avec
- une ligne de transmission multiphasée (4) pour la transmission d'une alimentation électrique entre un réseau d'alimentation électrique (2) et un agencement de charges (3), comprenant
un dispositif de déconnexion (5), configuré pour scinder la ligne de transmission (4) en deux sections mutuellement isolées électriquement, une section d'arrivée (6) et une section de sortie (7), lorsque le dispositif de déconnexion (5) est actionné ;
- un dispositif de surveillance de réseau (8) relié à la section d'arrivée (6) de la ligne de transmission (4) et configuré pour surveiller un état du réseau d'alimentation électrique (2) ; et
- un dispositif de formation de réseau (9) servant à former un réseau d'alimentation électrique local autonome, le dispositif de formation de réseau (9) étant relié à la section de sortie (7) de la ligne de transmission (4) par l'intermédiaire d'une première phase (L1'),
**caractérisée par**
au moins un dispositif de connexion (10) relié à la section de sortie (7) de la ligne de transmission (4) et configuré pour relier une deuxième phase (L2') et/ou une troisième phase (L3') de la section de sortie (7) de la ligne de transmission (4) à la première phase (L1') de la section de sortie (7) de la ligne de transmission (4), afin de former une phase commune.

2. Installation d'alimentation électrique locale (1) selon la revendication 1, dans laquelle le dispositif de formation de réseau (9) comprend une batterie (11) et un onduleur (12),
dans laquelle l'onduleur (12) est connecté à la première phase (L1') et à un conducteur neutre (N') de la section de sortie (7) de la ligne de transmission (4)
de telle sorte que l'onduleur puisse recharger la batterie (11) via la première phase (L1') de la section de sortie (7) de la ligne de transmission (4) pendant que le dispositif de déconnexion (5) est désactivé et que la section d'arrivée (6) et la section de sortie (7) de la ligne de transmission (4) sont reliées entre elles.

3. Installation d'alimentation électrique locale (1) selon la revendication 1, comprenant également une unité de génération d'énergie électrique locale (16), en particulier un générateur photovoltaïque relié à un convertisseur photovoltaïque, servant à fournir de l'énergie à la ligne de transmission (4).

4. Installation d'alimentation électrique locale (1) selon l'une des revendications 1 à 3, dans laquelle le dispositif de connexion (10) comprend des éléments de commutation manuels configurés pour empêcher le couplage d'une ou de toutes les phases (L1',L2',L3').

5. Installation d'alimentation électrique locale (1) selon l'une des revendications 1 à 4, comprenant également un dispositif de commande (15) configuré pour commander le dispositif de déconnexion (5), le dispositif de connexion (10) et le dispositif de formation de réseau (9) pour qu'ils forment un réseau autonome dans la section de sortie (7) de la ligne de transmission (4) en cas de détection, par le dispositif de surveillance de réseau (8), d'un état de défaut du réseau d'alimentation électrique (2).

6. Procédé d'exploitation pour une installation d'alimentation électrique locale (1), dans lequel l'installation d'alimentation électrique (1) comprend
- une ligne de transmission (4),
- un dispositif de déconnexion (5) configuré pour scinder la ligne de transmission (4) en une section d'arrivée (6) et une section de sortie (7), et
- un dispositif de formation de réseau (9) connecté sur au moins une phase (L1') à la section de sortie (7) de la ligne de transmission (4) pour alimenter en énergie électrique ladite au moins une phase (L1'),
dans laquelle l'installation d'alimentation électrique locale (1) est reliée à un réseau d'alimentation électrique multiphasé (2) et à un agencement de charges (3) composé de charges (V1, V2, V3), le procédé d'exploitation comprenant les étapes consistant à:
- surveiller le réseau d'alimentation électrique (2) et déterminer un état du réseau d'alimentation électrique (2) ;
- déconnecter l'agencement de charges (3) du réseau d'alimentation électrique (2) en actionnant le dispositif de déconnexion (5) en cas de détermination d'un état de défaut sur le réseau d'alimentation électrique (2) ;
- l'activation du formateur de réseau (9) et l'alimentation en énergie de la section de sortie (7) de la ligne de transmission (4) par le formateur de réseau (4) via ladite au moins une phase (L1') ;
- relier ladite au moins une phase (L1') de l'agencement de charges (3) à une autre phase (L2', L3') de la section de sortie (7) par activation d'un dispositif de connexion (10); et
- alimenter au moins certaines des charges (V1, V2) qui sont raccordées aux différentes phases (L1', L2', L3') maintenant raccordées par le dispositif de formation de réseau (9) pour former un réseau d'alimentation électrique local autonome par l'intermédiaire des phases (L1', L2', L3') reliées entre elles.

7. Procédé d'exploitation selon la revendication 6, comprenant les étapes supplémentaires suivantes après l'étape consistant à relier lesdites au moins deux phases de l'agencement de charges (3) :
- surveiller le réseau d'alimentation électrique (2) et déterminer un état du réseau d'alimentation électrique (2) ;
- déconnecter lesdites au moins deux phases de l'agencement de charges (3) dans le cas où l'état de défaut sur le réseau d'alimentation électrique (2) n'est plus présent ; et
- relier l'agencement de charges (3) au réseau d'alimentation électrique (2) afin d'alimenter les charges (V1, V2, V3).

8. Procédé d'exploitation selon la revendication 6 ou 7, dans lequel le dispositif de formation de réseau (9) est mis en marche ou arrêté en fonction de l'état du réseau d'alimentation électrique (2).

9. Procédé d'exploitation selon l'une des revendications 6 à 8, dans lequel toutes les phases de l'agencement de charges (3) sont reliées afin d'alimenter toutes les charges (V1, V2, V3) en cas d'état de défaut.

10. Procédé d'exploitation selon l'une des revendications 6 à 9 pour une installation d'alimentation électrique (2) comprenant un dispositif de formation de réseau multiphasé (9), dans lequel, après détermination de l'état de défaut et avant que lesdites au moins deux phases de l'agencement de charges (3) ne soient reliées, l'étape supplémentaire suivante est exécutée :
- synchronisation des angles de phase au niveau des sorties du dispositif de formation de réseau (9) qui sont reliées aux phases de l'agencement de charges (3) avant que les phases de l'agencement de charges (3) ne soient reliées les unes aux autres.

11. Procédé d'exploitation selon les revendications 7 et 10, dans lequel, après la déconnexion desdites au moins deux phases de l'agencement de charges (3) et avant la connexion de l'agencement de charges (3) au réseau d'alimentation électrique (2), l'angle de phase au niveau de chaque sortie du dispositif de formation de réseau (9) est synchronisé sur un angle de phase d'une phase correspondante du réseau d'alimentation électrique (2).
